# EUROPÄISCHE PATENTSCHRIFT

(11) **EP 0 561 800 B1**
(45) Veröffentlichungstag und Bekanntmachung des Hinweises auf die Patenterteilung: **24.08.1994**
(21) Anmeldenummer: 91919109.8
(22) Anmeldetag: 08.11.1991
(51) Int. Cl.: B62D 25/08, B62D 29/00, B62D 27/06, B62D 21/15

(54) **TRÄGERVERBINDUNG AN EINER FAHRZEUGKAROSSERIE, INSBESONDERE LÄNGSTRÄGERVERBINDUNG, UND VERFAHREN ZUM AUSTAUSCH EINES TRÄGERS**
VEHICLE-BODY SUPPORT-MEMBER JOINT, IN PARTICULAR A LONGITUDINAL-MEMBER JOINT, AND A METHOD OF REPLACING A SUPPORT MEMBER
ASSEMBLAGE DE SUPPORTS SUR UNE CARROSSERIE AUTOMOBILE, NOTAMMENT DE LONGERONS, ET PROCEDE POUR LE REMPLACEMENT D'UN SUPPORT

(30) Priorität: 20.12.1990 DE 4041039
(43) Veröffentlichungstag der Anmeldung: 29.09.1993
(73) Patentinhaber: AUDI AG, 85045 Ingolstadt (DE)
(72) Erfinder: KREIS, Gundolf, D-8072 Oberstimm (DE); TIMM, Heinrich, D-8070 Ingolstadt (DE); BORA, Viorel, D-8070 Ingolstadt (DE)
(74) Vertreter: Engelhardt, Harald
(86) Internationale Anmeldenummer: EP9102114
(87) Internationale Veröffentlichungsnummer: WO9211160

(56) Entgegenhaltungen:
- EP-A- 097 222
- DE-A- 3 740 402
- DE-C- 554 980
- FR-A- 1 329 656

## Beschreibung

Die Erfindung betrifft ein Verfahren zum Austausch eines Trägers an einer Trägerverbindung, insbesondere einer Längsträgerverbindung einer Fahrzeugkarosserie nach dem Oberbegriff des Anspruchs 1.

Es ist bekannt (EP-PS 0 146 716), die Tragstruktur von Fahrzeugkarosserien unter Verwendung von Hohlprofilträgern herzustellen, die durch Knotenelemente miteinander verbunden sind. Als Hohlprofilträger werden Aluminium-Strangpreßprofile und als Knotenelemente Aluminium-Gußknotenteile eingesetzt.

Es ist weiter bekannt, als Hohlprofil ausgebildete Längsträger eines Kraftfahrzeugrahmens aus verformbaren Längsträgerabschnitten aufzubauen. Diese Längsträgerabschnitte sind durch in Querrichtung laufende Schweißnähte verbunden und durch unterschiedliche Wandstärken und/oder Werkstoffgüten so dimensioniert, daß jeder Längsträgerabschnitt zur Fahrzeugmitte hin eine zunehmend größere Steifigkeit aufweist. Damit wird eine abgestufte Steifigkeit zur Fahrzeugmitte hin erreicht, so daß bei leichteren Unfällen nur jeweils einer oder gegebenenfalls je nach Unfallschwere mehrere Längsträgerabschnitte der Reihe nach deformiert werden ohne Beschädigung anschließender Abschnitte. Bei einer Reparatur brauchen nur die verformten Abschnitte ausgewechselt werden.

Damit wird eine unerwünschte Gesamtdeformation des Fahrzeugrahmens schon bei kleineren Unfällen vermieden. Der dargestellte Kraftfahrzeugrahmen ist aus Blechteilen aufgebaut, so daß das Auswechseln durch Abtrennen von Längsträgerabschnitten und erneutes Anschweißen neuer Abschnitte keine prinzipiellen Probleme hervorruft.

Bei einer weiter bekannten Längsträgerausführung eines Fahrzeugrahmens (DE-OS 37 40 402) sind die Längsträger vor der Aggregateaufhängung geteilt. Auch hier sind die vorderen Längsträgerteile als Deformationselemente so ausgebildet, daß sie gegenüber den hinteren Längsträgerteilen leichter verformbar sind. Die Verbindung der hintereinander liegenden Längsträgerteile erfolgt über Anlageflächen, die als in Querrichtung liegende Rotationsflächen ausgeführt sind und über eine in Axialrichtung durchgehende, zentrale Verschraubung durch diese Anlageflächen. Diese Ausführungsform ist insbesondere bei Verwendung von Aluminium-Strangprofilen als vorteilhaft herausgestellt. Ein Austausch eines vorderen, verformten Längsträgerteils nach einem leichteren Aufprall ist aufgrund der Verschraubung relativ einfach und schnell möglich, wobei die nachfolgend geschilderten Probleme beim Austausch von Aluminiumträgern mit Schweißverbindungen nicht auftreten. Die Kosten für solche Schraubverbindungen sind jedoch relativ hoch.

Aus dem eingangs erwähnten Stand der Technik (EP-PS 0 146 716) ist eine Trägerverbindung an einer Fahrzeugkarosserie bekannt, wobei ein Aluminiumträger als Strangprofil in eine rohrförmige Aluminiumaufnahme eines Gußteils eingesteckt ist und am stirnseitigen Rand dieser rohrförmigen Aufnahme umlaufend über eine Schweißnaht verschweißt ist. Eine solche Verbindung ist stabil und preiswert herstellbar.

Es ist aber nun allgemein bekannt, daß bei der Verwendung von aushärtbaren Aluminiumlegierungen eine Schmelzschweißung in der sog. Wärmeeinflußzone einen Festigkeitsabfall im Material erzeugt.

Dieses Problem tritt insbesondere bei der Trägerverbindung an einem geteilten Längsträger auf, da hier von vorneherein vorgesehen ist, bei einer Reparatur nach einem Unfalll den vorderen, leichter deformierbaren Längsträgerteil gegebenenfalls sogar öfter während der Lebensdauer eines Fahrzeugs auszuwechseln. Dabei würde durch die wiederholt notwendigen Schweißvorgänge die Verbindungsstelle durch einen fortschreitenden Strukturwandel in der Wärmeeinflußzone des Aluminiumlegierungsmaterials untragbar geschwächt werden.

Es wäre denkbar, von vorneherein die Verbindungsstelle so stark zu dimensionieren, daß auch der vorstehend genannte starke, durch nacheinander durchgeführte Schweißungen verursachte Festigkeitsabfall zu keiner Bruchgefahr führt. Dies ist jedoch aus Kostengründen und Gewichtsgründen keine praktikable Lösung.

Zudem ist eine Trägerverbindung bekannt (DE-C-554 980), bei der ein Träger in eine rohrförmige Aufnahme formschlüssig eingesetzt und mit Hilfe einer Mutternplatte über eine Schraubverbindung fixiert ist. Hier fehlt jedoch ein Hinweis, daß eine derartige Schraubverbindung für den Austausch eines ursprünglich angeschweißten Trägers geeignet sein könnte und daß der Träger konzentrisch mit der Mutternplatte verbunden wird.

Aufgabe der Erfindung ist es, ein geeignetes Verfahren zum Austausch eines Trägers, insbesondere für eine Reparatur, vorzuschlagen, wobei die Festigkeit der ursprünglichen Verbindung mit einfachen Mitteln wieder erreichbar ist.

Diese Aufgabe wird mit den Merkmalen des Anspruchs 1 gelöst.

Gemäß dem Verfahren nach Anspruch 1 ist eine Trägerverbindung an einer Fahrzeugkarosserie, insbesondere eine Längsträgerverbindung, dadurch hergestellt, daß ein Träger, insbesondere als Strangprofil oder Tiefziehteil, in eine rohrförmige Aufnahme mit entsprechendem Querschnitt eingesetzt ist und am stirnseitigen Rand dieser rohrförmigen Aufnahme umlaufend über eine Schweißnaht verschweißbar ist. Eine solche Schweißverbindung wird bei der Erstmontage hergestellt. Bei einem Austausch des Trägers kann nicht einfach die Schweißnaht aufgetrennt, ein neuer Träger eingesetzt und erneut verschweißt werden, da durch mehrere, aufeinanderfolgende Schweißvorgänge an denselben Stellen und denselben Wärmeeinflußzonen durch weitere Strukturänderungen im Material ein unzulässiger Abfall in der Materialfestigkeit hervorgerufen würde.

Erfindungsgemäß wird daher vorgeschlagen, daß für einen Austausch des Trägers die Demontage so durchgeführt wird, daß die Schweißnaht aufgetrennt und der auszutauschende Träger aus der rohrförmigen Aufnahme abgenommen wird, daß in die Aufnahme ein neuer Träger eingesteckt wird, in dem im Bereich der Aufnahme ein zumindest teilweise formschlüssig an der Innenwand des Trägers anliegender Einsatz als Mutternplatte eingesetzt ist mit Gewindebohrungen in der Mutternplatte, die sowohl mit Bohrungen im Träger als auch mit Bohrungen in der Aufnahme fluchten und daß die Anordnung aus Aufnahme, Träger und Einsatz mit Schraubbolzen verschraubt wird.

Die Erstmontage einer solchen Trägerverbindung kann im Herstellerwerk schnell und kostengünstig durch eine Schweißung durchgeführt werden. In den Reparaturwerkstätten stehen u. U. die für eine geeignete Schweißung erforderlichen Geräte nicht zur Verfügung und gegebenenfalls fehlt dort auch die für eine stabile Schweißung erforderliche Erfahrung, insbesondere bei Schweißverbindungen an den kritischen Stellen einer Längsträgerverbindung, die sehr hohen Belastungen ausgesetzt sind. Außerdem sind für Schmelzschweißungen in diesem Bereich (Motorraum) Vorkehrungen, erstens zur Schaffung von Freiraum für den Schweißbrenner, das heißt evtl. Nebenaggregate- oder Motordemontage, und zweitens zur Brandverhütung, zu schaffen. Diese Arbeiten entfallen bei einer Schraubverbindung, so daß hier ein Zeit- und Kostenvorteil entsteht. Das erfindungsgemäße Austauschverfahren unter Verwendung einer Schraubverbindung kann dagegen einfach und kostengünstig bei Lieferung eines entsprechenden Reparatursatzes von jeder Werkstatt durchgeführt werden. Zudem tritt auch das Problem einer unzulässigen Festigkeitsreduzierung durch wiederholte Schweißvorgänge am Material nicht auf, da an der Aufnahme nur einmal im Herstellzustand geschweißt wird und diese Maßnahme bei der Dimensionierung berücksichtig wird.

Nach Anspruch 2 ist das erfindungsgemäße Verfahren besonders vorteilhaft bei einer Aluminium-Tragstruktur verwendbar, wobei der Träger und die Aufnahme aus Aluminium hergestellt sind.

Vorteilhaft wird nach Anspruch 3 der im Verfahren verwendete Träger zylindrisch, insbesondere als vorderes Längsträgerteil, ausgeführt, so daß die Aufnahme entsprechend als Kreisring ausgebildet ist. Es sind jedoch auch andere Profilquerschnitte möglich, die beispielsweise einfach im Strangpreßverfahren herstellbar sind.

Zweckmäßig wird der Reparaturfall und Austausch des Trägers von vornherein vorgesehen und daher die Aufnahme im Bereich der Bohrungen nach Anspruch 4 durch eine Materialverdickung, bevorzugt mit planen Auflageflächen für die Schraubenkopfanlage, verstärkt.

Für eine feste Trägerverbindung, bestehend aus der formschlüssigen Abstützung des Trägers in der Aufnahme in Verbindung mit der Verschraubung, wird nach Anspruch 5 vorgeschlagen, mehrere Bohrungen bzw. Gewindebohrungen am Umfang verteilt anzuordnen.

Zweckmäßig sind die Bohrungen nach Anspruch 6 in der Aufnahme und im Träger, z.B. als Ersatzteil, von vornherein enthalten, obwohl diese Bohrungen auch erst im Reparaturfall in der Werkstatt angebracht werden könnten.

Aus Gründen der Materialersparnis und eines günstigen Gewichts wird mit Anspruch 7 vorgeschlagen, den Einsatz als quer zur Längsachse verlaufende Platte, bevorzugt aus einem Strangpreßprofil, auszubilden mit einem freien Durchbruch im mittleren Bereich und einer umlaufenden Anlagefläche. Diese Anlagefläche wird zweckmäßig für einen Toleranzausgleich der Abmessungen des Trägerinnenraums durch einen Längsspalt aufgetrennt.

Für den erforderlichen festen Halt ist es nach Anspruch 8 zweckmäßig, im Bereich der Gewindebohrungen in den freien Durchbruch hinein Materialverdickungen vorzusehen.

Anhand einer Zeichnung wird das Verfahren anhand eines Ausführungsbeispiels einer Trägerverbindung mit weiteren Einzelheiten, Merkmalen und Vorteilen näher erläutert.

Es zeigen
- Fig. 1: eine schematische Seitenansicht der Tragstruktur eines vorderen Bereichs einer Fahrzeugkarosserie mit einem zweiteiligen vorderen Längsträger,
- Fig. 2: eine vergrößerte perspektivische Ansicht der Trägerverbindung zwischen einem ersten vorderen Längsträgerteil und einer Aufnahme an einem Gußteil,
- Fig. 3, 4, 5: die erforderlichen Teile für eine Reparatur mit einer Schraubverbindung,
- Fig. 6: eine Ansicht in Axialrichtung einer Trägerverbindung nach einer Reparatur mit einer Schraubverbindung.

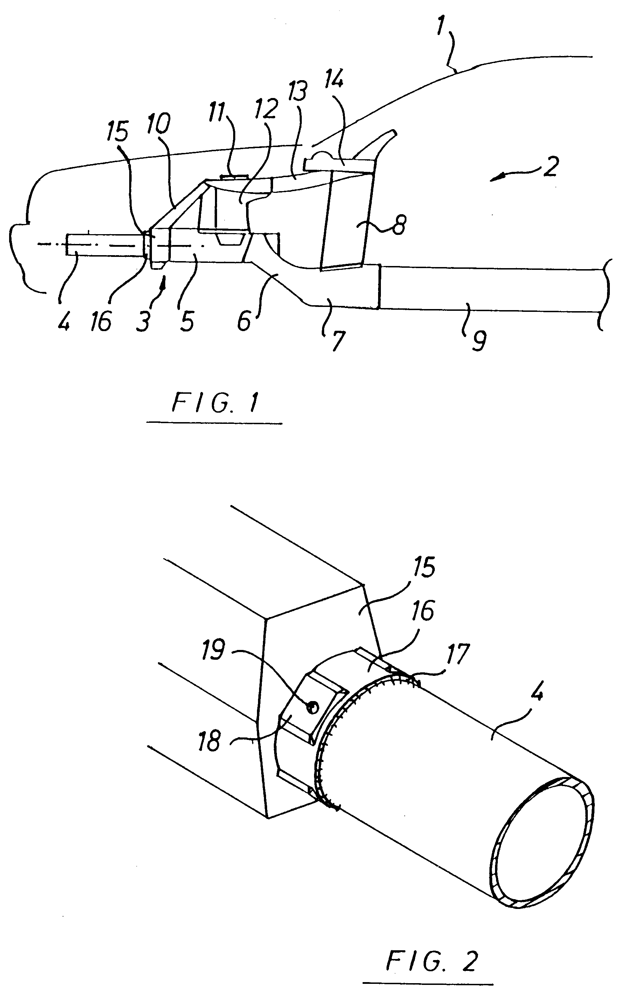

In Fig. 1 ist schematisch ein Kraftfahrzeug 1 im Schnitt dargestellt, wobei in der Seitenansicht der vordere Bereich der Tragstruktur der Fahrzeugkarosserie 2 zu ersehen ist. Ein vorderer Längsträger 3 besteht aus einem ersten vorderen Längsträgerteil 4 und einem anschließenden zweiten Längsträgerteil 5, der über eine seitliche Umlenkung 6 mit dem Fußpunkt 7 des Pfosten-A 8 und nachfolgend mit dem Schweller 9 verbunden ist.

Vom vorderen Ende des zweiten Längsträgerteils 5 verläuft ein Federbeinträger 10 schräg nach oben zur Halterung eines Federbeintopfs 11, der über einen weiteren, etwa senkrecht stehenden Träger 12 nach unten auf das zweite Längsträgerteil 5 und über einen Träger 13 zum mittleren Bereich 14 des Pfosten-A 8 abgestützt ist.

Der erste Längsträgerteil 4 und der zweite Längsträgerteil 5 sind über ein oder mehrere Gußteile 15 miteinander verbunden, an dem zusätzlich der Federbeinträger 10 angeformt ist. Das Gußteil 15 kann auch mehrteilig, z.B. in Form von Halbschalen, ausgeführt sein.

In Fig. 2 ist das Gußteil 15 vergrößert dargestellt, wobei eine zylindrische, rohrstutzenförmige Aufnahme 16 zu erkennen ist, in die der erste zylindrische Längsträgerteil 4 formschlüssig eingesteckt und mit einer Schweißnaht 17 verschweißt ist. Diese Anordnung stellt den Erstmontagefall dar, wo die Verbindung über die Schweißnaht 17 geschaffen ist. Es wäre aber auch bereits eine Verschraubung bei der Erstmontage möglich. Schon hier sind aber mehrere, am Umfang versetzt angeordnete Materialverdickungen 18 mit Planen Anlageflächen und Bohrungen 19 an der Aufnahme 16 vorgesehen.

Nach einem leichteren Unfall, wenn, wie konstruktiv vorgesehen, nur der erste vordere Längsträgerteil 4 verformt ist, wird in einem ersten Verfahrensschritt eines Reparatur- und Austauschverfahrens die Schweißnaht 17 aufgetrennt und der verformte Längsträgerteil 4 abgenommen. Damit ergibt sich die freiliegende Aufnahme 16 entsprechend Fig. 5.

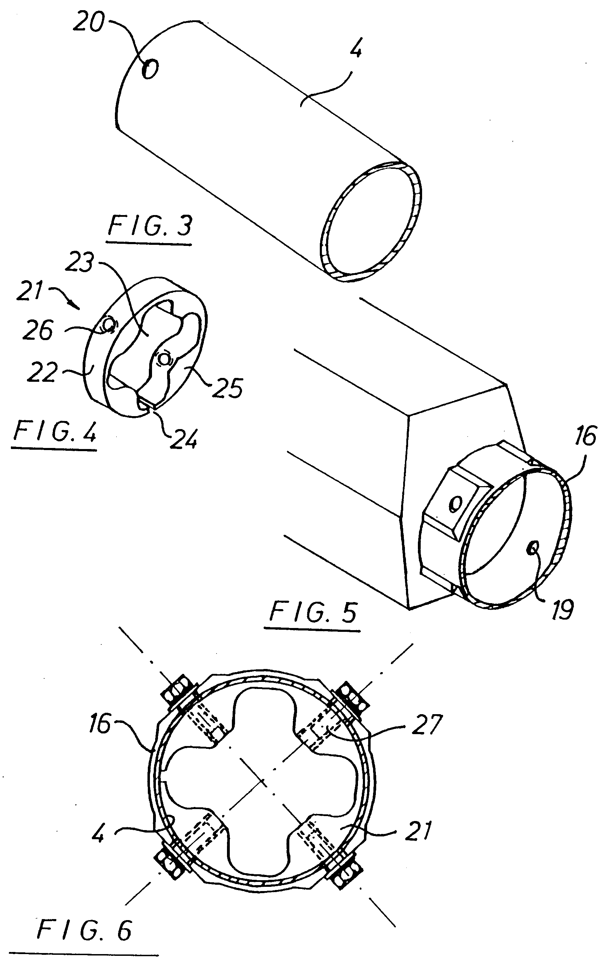

Nun steht ein Reparatursatz zur Verfügung bestehend aus einem neuen ersten vorderen Längsträgerteil 4 nach der Fig. 3, der im Einsteckbereich ebenfalls Bohrungen 20 entsprechend den Bohrungen 19 an der Aufnahme 16 enthält.

Der Reparatursatz enthält als weiteres Teil einen Einsatz 21 gemäß Fig. 4. Dieser ist als Platte mit einer zylindrischen Anlagefläche 22 ausgebildet, wobei im mittleren Bereich ein freier Durchbruch 23 angeordnet ist, der sich über einen Spalt 24 durch die Anlagefläche 22 fortsetzt. Im Bereich von Materialverdickungen 25 sind am Umfang versetzt mehrere Gewindebohrungen 26 angeordnet.

Der Einsatz 21 wird in einem weiteren Verfahrensschritt an der Endseite des Längsträgerteils 4 (Fig. 3) so eingesetzt, daß die Gewindebohrungen 26 und die Bohrungen 20 fluchten. Anschließend wird diese Anordnung in die Aufnahme 16 so eingesteckt, daß auch hier die Bohrungen 19 fluchtend liegen.

In einem letzten Verfahrensschritt wird die Anordnung aus Längsträgerteil 4, Einsatz 21 und Aufnahme 16 mit Hilfe von mehreren Schraubbolzen 27 verschraubt, so daß sich eine feste und formschlüssige Verbindung zwischen der Aufnahme 16 und dem Träger 4 ergibt.

Damit wird ein Reparaturverfahren zur Verfügung gestellt, mit dem ohne Festigkeitseinbußen ursprünglich über Schweißverbindungen befestigte Träger einfach und kostengünstig ausgewechselt werden können.

## Patentansprüche

1. Verfahren zum Austausch eines Trägers an einer Trägerverbindung, insbesondere einer Längsträgerverbindung einer Fahrzeugkarosserie,
mit einem Träger, insbesondere als Strangprofil oder Tiefziehteil, der in eine dem Querschnitt des Trägers entsprechende rohrförmige Aufnahme, insbesondere an einem Gußteil, eingesteckt und am stirnseitigen Rand dieser rohrförmigen Aufnahme umlaufend über eine Schweißnaht verschweißt ist,
dadurch gekennzeichnet,
daß für einen Austausch des Trägers (4) die Demontage so durchgeführt wird, daß die Schweißnaht (17) aufgetrennt und der auszutauschende Träger (4) aus der rohrförmigen Aufnahme (16) abgenommen wird,
daß in die Aufnahme (16) ein neuer Träger (4) eingesteckt wird, in dem im Bereich der Aufnahme (16) ein zumindest teilweise formschlüssig an der Innenwand des Trägers (4) anliegender Einsatz (21) als Mutternplatte eingesetzt ist mit Gewindebohrungen (26) in der Mutternplatte, die sowohl mit Bohrungen (20) im Träger (4) als auch mit Bohrungen (19) in der Aufnahme (16) fluchten, und
daß die Anordnung aus Aufnahme (16), Träger (4) und Einsatz (21) mit Schraubbolzen (27) verschraubt wird.

2. Verfahren nach Anspruch 1, dadurch gekennzeichnet, daß der im Verfahren verwendete Träger (4) und/oder die Aufnahme (16) aus Aluminium hergestellt sind.

3. Verfahren nach Anspruch 1 oder 2, dadurch gekennzeichnet, daß der im Verfahren verwendete Träger (4) zylindrisch ausgeführt und entsprechend die Aufnahme (16) als Kreisring ausgebildet ist.

4. Verfahren nach einem der Ansprüche 1 bis 3, dadurch gekennzeichnet, daß im Bereich der Bohrungen (19) die Aufnahme (16) durch eine Materialverdickung verstärkt ist.

5. Verfahren nach einem der Ansprüche 1 bis 4, dadurch gekennzeichnet, daß die Bohrungen (19, 20) bzw. Gewindebohrungen (26) am Umfang verteilt angeordnet sind.

6. Verfahren nach einem der Ansprüche 1 bis 5, dadurch gekennzeichnet, daß die Bohrungen (19) in der Aufnahme (16) von Anfang an enthalten sind und die Bohrungen (20) im Träger (4), der als Ersatzteil verwendet wird, enthalten sind.

7. Verfahren nach einem der Ansprüche 1 bis 6, dadurch gekennzeichnet, daß der Einsatz (21) als quer zur Längsachse verlaufende Platte ausgebildet ist, mit einem freien Durchbruch (23) im mittleren Bereich und einer umlaufenden Anlagefläche (22), die durch einen Längsspalt (24) aufgetrennt ist.

8. Verfahren nach Anspruch 7, dadurch gekennzeichnet, daß im Bereich der Gewindebohrungen (26) in den freien Durchbruch (23) hinein Materialverdickungen vorgesehen sind.

## Claims

1. Method for replacing a member on a beam connection, more particularly a side-member connection on a vehicle bodyshell,
having a member, more particularly in the form of an extruded profile or deep-drawn piece, which is pushed into a tubular locator corresponding to the cross-section of the member, more particularly a locator on a casting, and welded by means of a welding seam all round the front rim of said tubular locator,
characterised in that
replacement of the member (4) involves disassembly whereby the welding seam (17) is undone and the member (4) to be replaced is taken out of the tubular locator (16),
a new member (4) is pushed into the locator (16), an insert (21) being inserted in the member (4), near to the locator (16), to act as a nut plate and bearing at least in a partial form-fit against the inside wall of the member (4), said nut plate having threaded bores (26) which line up both with bores (20) in the member (4) and with bores (19) in the locator (16), and
the assembly comprising the locator (16), member (4) and insert (21) is bolted together with screw bolts (27).

2. Method according to claim 1, characterised in that the member (4) used in the method and/or the locator (16) are manufactured from aluminium.

3. Method according to claim 1 or 2, characterised in that the member (4) used in the method is of cylindrical construction and correspondingly the locator (16) is in the form of a circular ring.

4. Method according to any of claims 1 to 3, characterised in that near to the bores (19) the locator (16) is reinforced by an area of thicker material.

5. Method according to any of claims 1 to 4, characterised in that the bores (19, 20) and threaded bores (26) are respectively distributed around the circumference.

6. Method according to any of claims 1 to 5, characterised in that the bores (19) are incorporated in the locator (16) from the very start, and the bores (20) are incorporated in the member (4) used as the replacement part.

7. Method according to any of claims 1 to 6, characterised in that the insert (21) is in the form of a plate extending transverse to the longitudinal axis, having a free channel (23) in the middle portion and a contact surface (22) all round, which is divided by a lengthways gap (24).

8. Method according to claim 7, characterised in that near to the threaded bores (26) are provided areas of thicker material, extending into the free channel (23).

## Revendications

1. Procédé pour le remplacement d'une poutrelle au niveau d'un joint d'assemblage de la poutrelle, en particulier d'un joint d'assemblage d'un longeron d'une carrosserie d'automobile,
dans lequel une poutrelle, en particulier sous forme de profilé filé ou de pièce emboutie, est insérée dans un logement tubulaire correspondant à la section de la poutrelle, en particulier dans une pièce en fonte, et est soudée au moyen d'un cordon de soudure tout autour du bord d'extrémité de ce logement tubulaire,
caractérisé en ce que, pour le remplacement de la poutrelle (4), la démontage est effectué en défaisant le cordon de soudure (7) et en retirant du logement tubulaire (16) la poutrelle (4) à remplacer,
en ce qu'il est inséré, dans le logement (16), une poutrelle (4) neuve dans laquelle il est placé, dans la région du logement (16), un insert (21), sous forme de plaque-écrou, qui s'applique par emboîtement, au moins partiellement, contre la paroi interne de la poutrelle (4) et qui présente des trous taraudés (26) qui coïncident à la fois avec des forures (20) dans la poutrelle (4) et avec des forures (19) dans le logement (16), et
l'ensemble constitué par le logement (16), la poutrelle (4) et l'insert (21) est boulonné au moyen de boulons filetés (27).

2. Procédé selon la revendication 1, caractérisé en ce que la poutrelle (4) utilisée dans le procédé et/ou le logement (16) sont fabriqués en aluminium.

3. Procédé selon la revendication 1 ou 2, caractérisé en ce que la poutrelle (4) utilisée dans le procédé est cylindrique et, de façon correspondante, le logement (16) est réalisé sous forme d'anneau circulaire.

4. Procédé selon l'une quelconque des revendications 1 à 3, caractérisé en ce que le logement (16) est renforcé par une surépaisseur de matière dans la région des forures (19).

5. Procédé selon l'une quelconque des revendications 1 à 4, caractérisé en ce que les forures (19 et 20) et les trous taraudés (26) sont répartis sur la circonférence.

6. Procédé selon l'une quelconque des revendications 1 à 5, caractérisé en ce que les forures (19) sont présentes d'origine dans le logement (16) et les forures (20) sont pratiquées dans la poutrelle (4) qui est utilisée comme pièce de remplacement.

7. Procédé selon l'une quelconque des revendications 1 à 6, caractérisé en ce que l'insert (21) est réalisé sous forme de plaque qui s'étend perpendiculairement à l'axe longitudinal et qui présente un espace vide (23) dans sa région centrale et une surface périphérique de contact (22) qui est interrompue par une fente longitudinale (24).

8. Procédé selon la revendication 7, caractérisé en ce qu'il est prévu, dans la région des trous taraudés (26), des surépaisseurs de matière faisant saillie dans l'espace vide (23).
